# EUROPEAN PATENT APPLICATION

(11) **EP 1 026 852 A2**
(43) Date of publication of application: **09.08.2000**
(21) Application number: 00101777.1
(22) Date of filing: 28.01.2000
(51) Int. Cl.: H04L 9/32

(54) **Show-thru prevention and user authentication of uplink bursts without overhead**

(30) Priority: 02.02.1999 US 243164
(71) Applicant: TRW Inc., Redondo Beach, California 90278 (US)
(72) Inventor: Caso, Gregory S., Hermosa Beach, CA 90254 (US); Wright, David A., Solana Beach, CA 92075 (US)
(74) Representative: Schmidt, Steffen J., Dipl.-Ing.

(57) **Abstract**

A method and apparatus (100) for authenticating information transmitted to a receiver is presented. An information block is encoded (220) to form a raw codeword. A secret cover sequence S is then generated (122) using a hashing variable (124) and a secret key (126). The secret cover sequence is applied (128) through a reversible function to the raw codeword to form a covered codeword. The covered codeword is transmitted and received (130) at a receiver. At the receiver, a secret cover sequence R is generated (150) using a hashing variable (152) and a secret key (154). The secret cover sequence R is applied (156) through a reversible function to the raw codeword to form an uncovered codeword. The uncovered codeword is decoded (158), and if too many errors are reported, the data is discarded (160).

## Description

### BACKGROUND OF THE INVENTION

The present invention relates generally to authentication methods, and more particularly, to a method for authenticating information transmitted to a receiver.

Authentication methods in many forms have been employed to prevent unauthorized access to and usage of telecommunications systems. However, nearly all of today's authentication methods are based on the principles and teachings of Diffie and Hellman, who discovered that a true digital signature could be formed by using two cryptographic keys (public-key encryption), and/or Rivest, Shamir, and Adleman ("RSA"), who developed an algorithm (the "RSA algorithm") for public-key encryption. Generally, the RSA algorithm multiplies two large prime numbers, and derives a set of two numbers that constitute a private key and a public key. The RSA algorithm was first described in Rivest et al., U.S. Patent No. 4,405,829, entitled "Cryptographic Communications System and Method."

Cryptography techniques provide both encryption and authentication. Authentication refers to the process of identifying the sender of the message, analogous to the way one's handwritten signature provides authentication of an executed document. The sender of a message typically "signs" the message with a digital signature and appends it to the message.

In the past, proposed authentication methods have provided an explicit digital signature that is unique to each user transmitting data in an uplink. This digital signature is a bit pattern that is formed by an authorized user by hashing a commonly known variable ("hashing variable") using a secret key known only to the user and satellite. The hashing variable is any variable that is known to both the sender and recipient. As examples, in satellite communication systems, the uplink frame or slot number may be used as the hashing variable. The digital signature is then placed as an overhead item in the uplink burst (typically by appending the signature to the data stream). The satellite validates the digital signature by reversing the hashing operation using the secret key and commonly known variable. If the burst fails validation, it may be discarded. Thus, while existing authentication methods provide increased security, they do so at the expense of information throughput.

The inherent bandwidth and power limitations of present communication systems place a high economic value on information throughput. In past systems, the overhead generated by a digital signature, however, reduced information throughput by devoting a portion of that throughput to the signature itself. Thus, incorporating the signature overhead decreased information throughput, increased the complexity of the communications systems, and decreased the economic gains of operating a communications system.

Past systems employing authentication schemes also suffered from a phenomenon known as show-thru. For example, a burst that is sent in one beam (beam B) may appear, due to antenna sidelobe effects in another beam's receiver (e.g., a receiver for beam A). When there is no burst present in beam A, beam A is said to be in a quiescent condition. Show-thru occurs when the beam A receiver, in the quiescent condition, collects enough energy from beam B to allow the beam A receiver to decode beam B.

The spurious occurrence of show-thru presents a security threat to the information in the uplink burst for beam B. In other words, neighboring quiescent channels may actually decode (and ultimately send to unintended recipients) an uplink burst intended for a completely different channel. Show-thru thus undesirably and unnecessarily utilizes satellite resources, permits unauthorized usage of the uplink beam, and compromises the security in the transmitted data.

Therefore, a need is present in the industry for an improved authentication method which overcomes the disadvantages discussed above and previously experienced.

### BRIEF SUMMARY OF THE INVENTION

It is an object of the present invention to provide a method for authenticating information transmitted to a receiver.

It is another object of the present invention to provide a method for authenticating information transmitted to a receiver that reduces or eliminates overhead.

It is another object of the present invention to protect against unauthorized usage of an uplink beam.

It is another object of the present invention to prevent theft of service.

It is another object of the present invention to provide increased privacy for uplink traffic.

It is another object of the present invention to provide a method for increasing data throughput by reducing or eliminating overhead created by existing authentication schemes.

It is another object of the present invention to mitigate or eliminate show-thru.

It is another object of the present invention to employ the characteristics of an error control decoder to authenticate user information.

One or more of the foregoing objects are met in whole or in part by a method and apparatus for authenticating information transmitted to a receiver. First, an information block is encoded to form a raw codeword. Next, a secret cover sequence S is generated and applied through a reversible function to the raw codeword to form a covered codeword. The covered codeword is transmitted and received at a receiver as an observable. The receiver applies a secret cover sequence R through a reversible function to the observable to form an uncovered observable. The uncovered observable is then applied to a decoder capable of producing a resultant decoded block and an error count associated with the decoding process. The decoded block may then be discarded if the error count exceeds a predetermined threshold, or otherwise forwarded to an end user. As will be explained in more detail below, because the secret cover sequence S (for beam B) differs from the secret cover sequence R (for beam A), the decoder error rate will exceed the predetermined threshold during show-thru and thereby prevent unauthorized access to beam B.

### BRIEF DESCRIPTION OF THE SEVERAL VIEWS OF THE DRAWINGS

Fig. 1 shows a block diagram of a method of user authentication incorporating a particular embodiment of the present invention.
Fig. 2 shows a block diagram of an apparatus of user authentication incorporating a particular embodiment of the present invention.

### DETAILED DESCRIPTION OF THE INVENTION

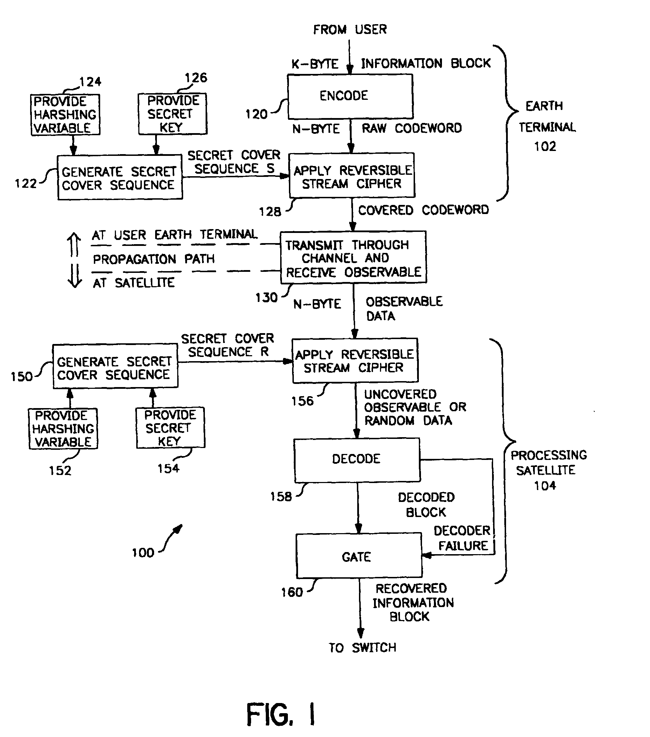

Fig. 1 shows a block diagram 100 of a method of user authentication according to a particular embodiment of the present invention. Fig. 1 illustrates the processes occurring at an earth terminal 102 and a processing satellite 104. The earth terminal 102 generally performs the steps of encoding 120, generating a secret cover sequence 122, and applying a reversible function 128. The processing satellite 104 generally applies the steps of generating a secret cover sequence R 150, applying a reversible function 156, decoding 158, and gating 160.

In more detail, an information block of K bytes is provided by a user. The user may be transmitting from an earth terminal, another processing satellite (not shown), or any other transmitter. The K-byte information block is encoded to form a raw codeword having a length of N-bytes. In a preferred embodiment, the encoding step 120 performs Reed-Solomon encoding, however any error control code that robustly protects against random noise may be employed. For example, any forward error correction codes that are members of the BCH family are also suitable.

A secret cover sequence is generated at step 122 by hashing a hashing variable (provided at step 124) using a secret key (provided at step 126) to form the secret cover sequence S. A secret cover sequence is a unique, beam-dependent sequence created by an authorized user. The hashing variable may be formed from the uplink frame or slot number, or alternatively from any other variable that is commonly known to both the user and the processing satellite. The secret key is a unique digital signature that identifies a particular authorized user. The digital signature may be created by any number of encryption and authentication techniques, such as, for example, those based on the RSA algorithm.

Next, a reversible function is applied at step 128 to the secret cover sequence S and the raw codeword to form a covered codeword. In a preferred embodiment, the reversible function step 128 performs an exclusive-OR (XOR) operation. In other words, the secret cover sequence S is applied through a reversible function (e.g., XORed) to the N-byte raw codeword. Alternatively, the reversible function step 128 may perform any operation or combination of operations that can be reapplied to remove the sender's secret cover sequence. The output of the reversible function 128 is a covered codeword. The covered codeword has the additional characteristic of being encrypted, because the operation, ([secret cover sequence] XOR [raw codeword]), renders the resultant covered codeword nearly impossible to decipher without knowledge of the secret key.

Once the covered codeword is formed, it is communicated (at step 130) to a processing satellite 104 through an uplink channel assigned to the earth terminal 102. As an example, the processing satellite 104 may include numerous uplinks and downlinks which define separate coverage areas and may further employ frequency reuse techniques. The processing satellite 104 may also switch uplink data after the uplink data has been demodulated and decoded, for separate transmission on the downlinks. After switching, the data is generally recoded and remodulated prior to transmission. As will be discussed in more detail below, the decoding function will permit unauthorized or random data (e.g., data present as a result of show-thru) to be discarded before being transmitted to another receiver. The processing satellite 104 may, thereby, act like a filter to remove unauthorized or random data.

Returning to Fig. 1, after transmission, N-bytes of observable data appear at the satellite. It is understood that after transmission, the observable data may include transmission errors. The observable data may be either data present at the receiver as a result of show-thru, (including a covered codeword) or may be data actually intended for the receiver with or without transmission errors.

A secret cover sequence is generated at step 150 by hashing a hashing variable (provided at step 152) with a secret key (provided at step 154) to form secret cover sequence R. The reversible functioning step 156 performs a reversible operation on the secret cover sequence R and the observable data. As stated previously, in a preferred embodiment, an exclusive-OR operation is applied through the secret cover sequence R to the observable data. However, any reversible operation or combination of operations may be employed instead at the transmitter and receiver. Regardless of the operation chosen, the reversible functioning 156 performs an operation capable of reconstructing the original codeword (differing by any transmission errors), provided the secret cover sequence R is the same as the secret cover sequence S.

When the secret cover sequence R is the same as the secret cover sequence S, the raw codeword originally generated (including possible transmission errors), results. Otherwise, random data results. In a preferred embodiment, the output (which contains either the codeword plus errors or random data) of the reversible function step 156 is decoded using Reed-Solomon decoding 158. As stated previously, any robust forward error correction technique may be employed instead. In a preferred embodiment, the Reed-Solomon decoding step 158 employs a (236, 212) code which has an undetected-error probability on the order of one part per billion and is particularly suited for ATM (Asynchronous Transfer Mode Cells) cells.

When random or unauthorized data, either due to show-thru or due to unauthorized use of an uplink beam, is uncovered at the satellite, that data will fail to be decoded at the decoding step 158 with near certainty. Thus, show-thru is prevented because bursts from another beam, for example, are rejected with high probability due to mismatch of secret cover sequences.

Random data will present at the decoding step 158, with very high probability, more errors than the decoder can fix, a condition known as "decoder failure." In other words, the decoded error measure (e.g., the number of errors actually determined by the decoder) exceeds a predetermined error threshold. In the example (232,212) code discussed above, the predetermined error threshold is one that exceeds the 12-byte error correcting capability of the (232,212) code. Decoder failure may occur in several situations. For example, when there is simply too much noise present in the transmission channel and thus too many errors in the received observable, (regardless of whether the cover sequences match) decoder failure will result. Second, decoder failure may occur when an unauthorized user attempts to use the uplink channel. In such a case, the secret cover sequence R would not match the secret cover sequence S, for want of a valid secret key, for example. Thus, applying the reversible function 158 would not recover substantially the original codeword. Rather, a random data codeword would be presented to the decoder, causing decoder failure with near certainty. Third, decoder failure may occur during a show-thru event. As noted above, show-thru occurs when burst in one beam is sufficiently strong in another quiescent beam's receiver as to be decodable at the satellite. The present invention mitigates or eliminates show-thru again because the secret cover sequence R would not match the secret cover sequence S. Accordingly, the original codeword would not be uncovered at the reversible function step 156. Again, the random data presented to the decoder will cause decoder failure.

Returning to Fig. 1, the decoded block is gated at step 160. The gating 160 operates to block unauthorized or random data prior to transmission. If decoder failure occurs, for example, the gating may block the decoded block by discarding it. Otherwise, the decoded block passes through for subsequent transmission.

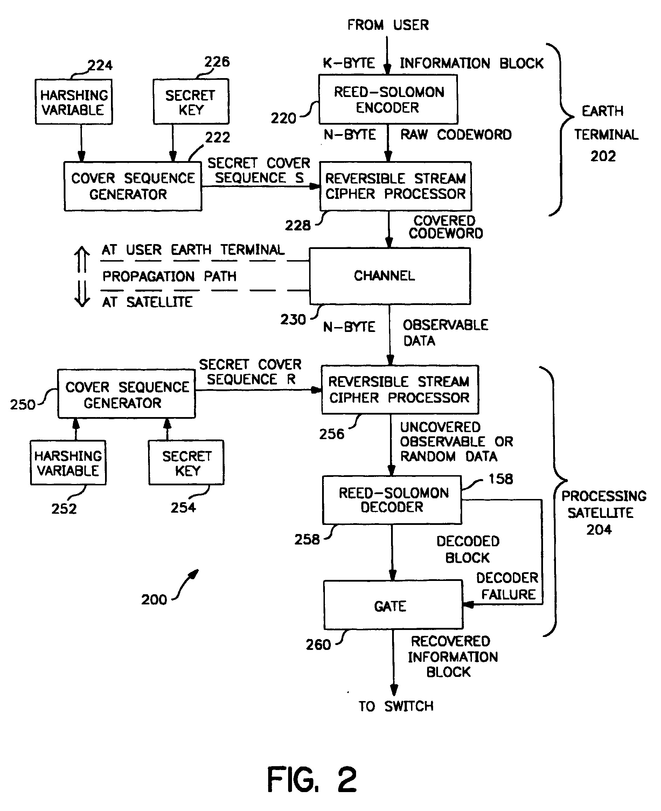

Turning now to Fig. 2, a block diagram 200 of an apparatus for user authentication according to a particular embodiment of the present invention is shown. Fig. 2 generally illustrates an earth terminal 202 and a processing satellite 204. The earth terminal 202 includes preferably, a Reed-Solomon encoder 220, a secret cover sequence generator 222, and a reversible function processor 228. The processing satellite 204 generally includes a secret cover sequence generator 250, a reversible function processor 256, a Reed-Solomon decoder 258, and a gate 260.

As in the method illustrated in Fig. 1, an informatibn block of K bytes is provided by a user, which may be transmitting from an earth terminal or another processing satellite (not shown), for example. The information block is encoded to form a raw codeword having a length of N-bytes. In a preferred embodiment, the encoder is a Reed-Solomon encoder 220, however, as emphasized earlier, any other robust error control code may be employed instead of the Reed-Solomon code.

A secret cover sequence generator 222 hashes a hashing variable 224 using a secret key 226 to form a secret cover sequence S. As stated previously, the hashing variable 224 may be formed from the uplink frame or slot number, or from any other variable that is commonly known to both the user and the processing satellite.

The secret cover sequence S and the raw codeword are provided as inputs to a reversible function processor 228. The reversible function processor 228 applies a reversible cipher operation through secret cover sequence S to the raw codeword to form a covered codeword. In a preferred embodiment, the reversible function processor 228 performs an exclusive-OR operation. Alternatively, the reversible function processor 228 may perform any operation or combination of operations that can be reapplied to reconstruct the original raw codeword. The output of the reversible function processor 228 is a covered codeword.

The covered codeword is transmitted to a processing satellite 204 in the uplink channel 230 assigned to the earth terminal 202. After transmission, N-bytes of observable data appear at the processing satellite 204. As explained previously, the observable data may include transmission errors.

Still referring to Fig. 2, a secret cover sequence generator 250 hashes a hashing variable 252 with a secret key 254 to form secret cover sequence R. The reversible function processor 256 performs a reversible operation through secret cover sequence R to the observable data. In a preferred embodiment, an exclusive-OR operation is applied through the secret cover sequence R to the observable data.

When the secret cover sequence R is identical to the secret cover sequence S, the original raw codeword, which may include one or more transmission errors, results. Otherwise, random data results. In a preferred embodiment, the output of the reversible function processor 256 (which contains either the codeword plus errors or random data) is decoded by a Reed-Solomon decoder 258.

If unauthorized or random data is present at the Reed-Solomon decoder 258, decoder failure results with near certainty. The conditions under which decoder failure may result were described previously in connection with Fig. 1.

The decoded block is passed through a gate 260. The gate 260 operates to block unauthorized or random data prior to transmission. If decoder failure occurs, the gate 260 blocks the decoded block by discarding it. Otherwise, the data passes through the gate 260 to subsequent transmission circuitry.

Referring to Fig. 2 generally, the secret cover sequence generators 222 and 250 and the reversible function processors 228 and 256 may be implemented using combinatorial logic, ASICs, through software executed by a CPU, a DSP chip, or the like. The foregoing hardware elements may be part of hardware that is used to perform other operational functions at the earth terminal 202 or processing satellite 204. The hashing variables 224 and 252 and the secret keys 226 and 254 may be stored in registers, RAM, ROM, or the like, and may be generated through software, through a data structure located in a memory device such as RAM or ROM, and so forth.

In a preferred embodiment, the reversible function processors 228 and 256 are exclusive-OR logic circuits having at least two inputs (one for a secret cover sequences and the other for the raw data to be exclusive-Ored), and at least one output for outputting the resultant exclusive-Ored codeword. Furthermore, the secret cover sequence generator may be an ASIC programmed to hash a hashing variable 224 or 252 and a secret key 226 or 254 to form a secret cover sequence.

The present invention thus provides user authentication virtually guaranteed by operation of the reversible function processor and by exploiting the robust error control coding employed in processing satellites. Additionally, show-thru mitigation is achieved, for example, by exploiting decoder failure which, when it occurs, indicates with very high probability that unauthorized or random data is present at the receiver. Furthermore, the benefits of user authentication and show-thru mitigation are achieved by the present invention without generating overhead. Instead of being appended to the information block as an overhead item, the user authentication information is incorporated into the information block itself by, for example, XORing an encoded codeword with a secret cover sequence.

While particular elements, embodiments and applications of the present invention have been shown and described, it will be understood, of course that the invention is not limited thereto since modifications may be made by those skilled in the art, particularly in light of the foregoing teachings. It is therefore contemplated by the appended claims to cover such modifications as incorporate those features which come within the spirit and scope of the invention.

## Claims

1. A method for generating authenticable information for transmission to a receiver, the method comprising the steps of:
encoding an information block to form a raw codeword;
generating a secret cover sequence S;
applying said secret cover sequence through a reversible function to said raw codeword to form a covered codeword; and
transmitting said covered codeword to a receiver.

2. The method of claim 1 further comprising the step of authenticating said covered codeword according to the following substeps:
receiving said covered codeword at a receiver;
generating at said receiver a secret cover sequence R;
applying said secret cover sequence R through said reversible function to said covered codeword to form an uncovered codeword; and decoding said uncovered codeword to form a decoded uncovered codeword and an associated decoded error measure.

3. The method of claim 2 further comprising the steps of:
establishing an error threshold; and
discarding said decoded uncovered codeword when said error measure exceeds said error threshold.

4. The method of claim 1 wherein said applying step comprises applying said secret cover sequence through said reversible function to said raw codeword to generate a covered codeword of the same size as said raw codeword.

5. The method of claim 1, wherein said encoding step comprises Reed-Solomon encoding.

6. The method of claim 1, wherein said applying step comprises applying an exclusive-OR reversible function.

7. The method of claim 1, further comprising the step of storing a plurality of secret keys.

8. The method of claim 7, wherein said generating step further comprises the steps of:
providing a hashing variable and one of said secret keys; and
hashing said hashing variable using said secret key to form said secret cover sequence.

9. The method of claim 7, wherein said storing step comprises storing an uplink frame number.

10. The method of claim 7, wherein said storing step comprises storing a slot number.

11. A communications system for generating authenticable information, said system comprising:
a transmitter comprising:
a block encoder for encoding an information block to form a raw codeword;
a secret cover sequence generator for generating a secret cover sequence S; and
a reversible function processor for applying said secret cover sequence through a reversible function to said raw codeword to form a covered codeword.

12. The communications system of claim 11 for further authenticating said covered codeword, said system comprising:
a receiver for receiving said covered codeword,
a secret cover sequence generator for generating a secret cover sequence R;
a reversible function processor for applying said secret cover sequence R through said reversible function to said raw codeword to form an uncovered codeword; and
a decoder for decoding said uncovered codeword to form a decoded uncovered codeword and an associated error measure.

13. The communications system of claim 12, wherein said decoder includes an error threshold and further comprising a gate for discarding said decoded uncovered codeword when said error measure exceeds said error threshold.

14. The communications system of claim 13 further comprising a memory for storing at least one hashing variable and at least one secret key.

15. The communications system of claim 11, wherein said reversible function processor comprises an exclusive-OR operator.

16. The communications system of claim 11 further comprising a memory for storing a plurality of secret keys.
